# EUROPÄISCHE PATENTANMELDUNG

(11) **EP 0 934 862 A1**
(43) Veröffentlichungstag der Anmeldung: **11.08.1999**
(21) Anmeldenummer: 98124002.1
(22) Anmeldetag: 17.12.1998
(51) Int. Cl.: B62B 3/14

(54) **Einkaufswagen mit Sitz**

(30) Priorität: 07.02.1998 DE 19804908
(71) Anmelder: Beckstedde, Angelika, 33378 Rheda-Wiedenbrück (DE)
(72) Erfinder: Beckstedde, Angelika, 33378 Rheda-Wiedenbrück (DE)
(74) Vertreter: TER MEER STEINMEISTER & PARTNER GbR

(57) **Zusammenfassung**

Bei einem Einkaufswagen mit einem Korb (10) und einem am rückwärtigen Ende des Korbes angebrachten Schiebegriff (12) ist die Bodenwand (16) des Korbes nach vorn über den Korb hinaus verlängert, so daß eine Sitzplatte (18) gebildet wird. Auf diese Weise wird mit einfachen Mitteln ein stabiler und sicherer Behindertensitz geschaffen, der es Gehbehinderten gestattet, am Einkauf teilzunehmen.

## Beschreibung

Die Erfindung betrifft einen Einkaufswagen mit einem Korb, einem am rückwärtigen Ende des Korbes angebrachten Schiebegriff und einer am vorderen Ende des Einkaufswagens angeordneten Sitzplatte.

Einkaufswagen weisen üblicherweise einen Kindersitz auf. der von der Rückwand des Korbes abklappbar und so ausgebildet ist, daß das Kind mit dem Rücken in Fahrtrichtung sitzt.

Aus DE 43 37 917 A1 ist ein Einkaufswagen der Eingangs genannten Art bekannt, bei dem ein Kindersitz für größere Kinder so am vorderen Ende des Einkaufswagens angeordnet ist. daß das Kind in Fahrtrichtung blickt und der Rücken des Kindes der vorderen Wand des Korbes zugewandt ist. Der Sitz wird bei diesem bekannten Einkaufswagen durch eine Art Hocker gebildet. der unabhängig von dem Korb auf dem Fahrgestell des Einkaufswagens montiert ist.

Diese Bauweise ist relativ aufwendig und hat außerdem den Nachteil, daß das vordere Ende des Korbes verletzungsgefährliche Ecken und Kanten im Rückenbereich des Kindes bildet.

Aufgabe der Erfindung ist es, einen Einkaufswagen der Eingangs genannten Art zu schaffen, der einfach aufgebaut und verletzungssicher ist.

Diese Aufgabe wird erfindungsgemäß dadurch gelöst, daß die Sitzplatte ein nach vorn über den Korb hinaus verlängerter Teil der Bodenwand des Korbes ist.

Die Sitzplatte und der Boden des Korbes können somit rationell in einem Stück gefertigt werden, und zumindest ein Teil des Gewichts der auf der Sitzplatte sitzenden Person wird unmittelbar durch den Korb aufgenommen, so daß eine Fußkonstruktion, mit der sich die Sitzplatte auf dem Fahrgestell des Einkaufswagens abstützt, weniger tragfähig und damit einfacher ausgebildet werden kann oder ganz entfallen kann. Da sich die Sitzplatte unmittelbar an den Boden des Korbes anschließt, ist die Gefahr, daß sich der Benutzer des Sitzes an der vorderen unteren Kante oder den vorderen unteren Ecken des Korbes verletzt, erheblich verringert.

Bei der üblichen Höhe des Bodens des Korbes ergibt sich bei dem erfindungsgemäßem Wagen eine auch für Erwachsene bequeme Sitzhöhe. Die Sitzplatte bei dem erfindungsgemäßen Einkaufswagen ist insbesondere für Ältere oder gehbehinderte Erwachsene gedacht, die auf diese Weise in Begleitung eines Betreuers an dem Einkauf teilnehmen und somit selbst die Kaufentscheidungen treffen können.

Vorteilhafte Ausgestaltungen der Erfindung ergeben sich aus den Unteransprüchen.

Bevorzugt sind auch die Seitenwände des Korbes nach vom über das vordere Ende des Korbes hinaus verlängert und als Armlehnen ausgebildet. Diese Armlehnen dienen nicht nur der Bequemlichkeit des Benutzers, sondern geben ihm vor allem einen besseren seitlichen Halt, so daß die Sicherheit erhöht wird. Zugleich tragen die verlängerten Seitenwände des Korbes zu einer erhöhten mechanischen Stabilität bei, so daß durch die Sitzplatte und die Armlehnen ein freitragender Sitz ohne Fußgestell gebildet wird.

Die vordere Wand des Korbes ist vorzugsweise nach oben verlängert und leicht schräg gestellt, so daß sie eine bequeme Rückenlehne bildet.

Die Bodenwand des Korbes und die Sitzplatte sind nach vorn leicht ansteigend ausgebildet. Dies verringert die Gefahr, daß der Benutzer nach vorn von der Sitzplatte abrutscht, und ermöglicht es zugleich, die Einkaufswagen in der bei normalen Einkaufswagen üblichen Weise ineinander zu schieben.

Der Bereich unterhalb des Korbes und der Sitzplatte kann als zusätzliche Stellfläche für Einkaufsgüter genutzt werden und bildet darüberhinaus am vorderen Ende eine Fußraste für die auf der Sitzplatte sitzende Person.

Da der Einkaufswagen ein verhältnismäßig großes Gewicht und einen relativ weit vorn liegenden Schwerpunkt hat, wenn ein Erwachsener auf dem Sitz Platz nimmt, sind vorzugsweise nur die hinteren Räder des Einkaufswagens als Lenkrollen ausgebildet, so daß ein sicheres Lenken des Einkaufswagens möglich ist.

Die Sitzplatte ist vorzugsweise ebenso wie der Boden des Korbes als Gitterrost ausgebildet. Dies ermöglicht nicht nur eine rationelle Fertigung, sondern hat auch den Vorteil, daß sich auf der Sitzplatte keine Wasserlachen sammeln können, wenn der Einkaufswagen bei Regen im Freien benutzt wird.

Im Folgenden wird ein bevorzugtes Ausführungsbeispiel anhand der Zeichnungen näher erläutert.

Es zeigen:
Figur 1 eine Seitenansicht des Einkaufswagens;
Figur 2 den Einkaufswagen nach Figur 1 in der Draufsicht;
Figur 3 eine Frontansicht des Einkaufswagens;
Figur 4 eine Seitenansicht von zwei ineinander geschobenen Einkaufswagen.

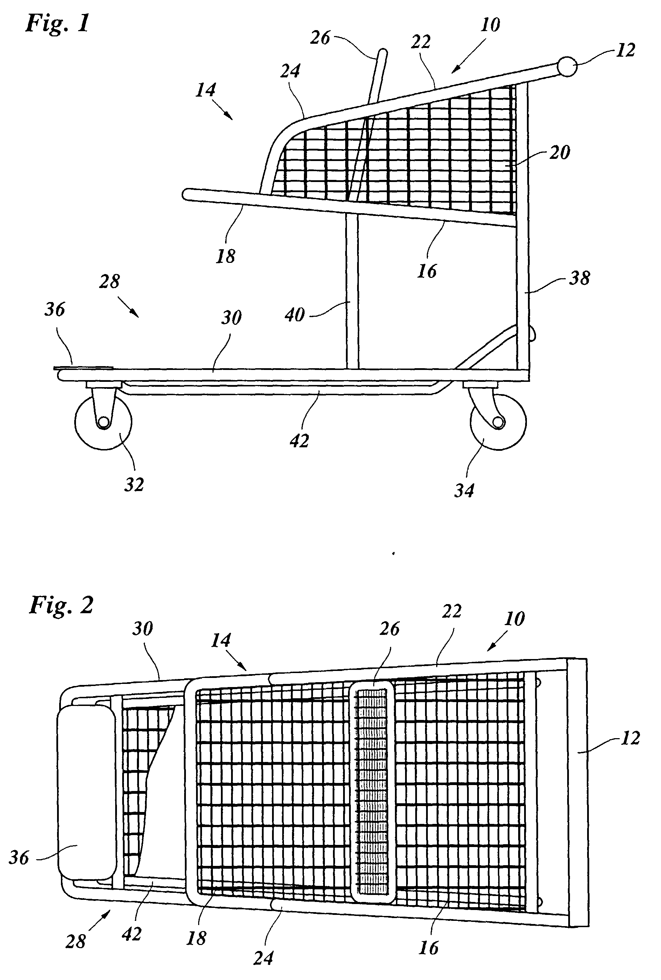

Der in Figuren 1-3 gezeigte Einkaufswagen weist einen Korb 10 auf, an dessen rückwärtigem Ende, rechts in Figur 1, ein Schiebegriff 12 angebracht Ist. Am vorderen Ende des Korbes 10 ist ein Sitz 14 für Erwachsene vorgesehen.

Die Wände des Korbes 10 werden, wie bei Einkaufswagen allgemein üblich, durch Metallrahmen gebildet, die mit einem Gitterrost ausgefüllt sind. Die wie üblich leicht nach vorn ansteigende und sich nach vorn etwas verjüngende Bodenwand 16 des Korbes ist über das vordere Ende des Korbes hinaus verlängert und bildet eine Sitzplatte 18 des Sitzes. Ebenso sind auch die Seitenwände 20 des Korbes 10 nach vorn verlängert, so daß sie Seitenstützen des Sitzes 14 bilden. Die oberen und vorderen Ränder der Seitenwände 20 werden durch schräg nach vorn abfallende Metallholme 22 gebildet, die am rückwärtigen Ende den Schiebegriff 12 tragen und am vorderen Ende abwärts gebogen und an die Sitzplatte 18 angeschlossen sind, so daß sie zugleich als Armlehnen 24 dienen. Zugleich wird auf diese Weise das die Sitzplatte 18 und die Bodenwand 16 bildende Element verseift. Die vordere Wand 26 des Korbes 10 ist leicht nach hinten geneigt und bildet zugleich eine Rückenlehne des Sitzes 14.

Ein Fahrgestell 28 des Einkaufswagens wird in üblicher Weise durch einen in der Draufsicht U-förmigen, sich nach vorn verjüngenden Rahmen 30 gebildet, an dem zwei vordere Rollen 32 und zwei hintere Rollen 32 angebracht sind. Die hinteren Rollen 34 sind als Lenkrollen ausgebildet, während die vorderen Rollen 32 nicht lenkbar sind. Auf dem vorderen Ende des Rahmens 30 ist eine Fußraste 36 angeordnet, auf die der Benutzter des Sitzes 14 seine Füße aufstellen kann.

Der Korb 10 ist mit dem Fahrgestell 28 in üblicher Weise durch zwei vom hinteren Ende des Fahrgestells aufragende vertikale Holme 38 verbunden. Damit das Gewicht der auf dem Sitz 14 sitzenden Person aufgenommen werden kann, werden der Korb 10 und der Sitz 14 durch zusätzliche vertikale Holme 40 unterstützt, die im Bereich des vorderen Endes des Korbes 10 angeordnet sind.

Innerhalb des Rahmens 30 ist ein Bodenrost 42 angeordnet, das als zusätzliche Stellfläche für Einkaufsgüter dient. Ein Teil des Bodenrostes 42 liegt tiefer als der Rahmen 30, so daß durch die Rahmenholme eine seitliche Führung für die abgestellten Gegenstände gebildet wird.

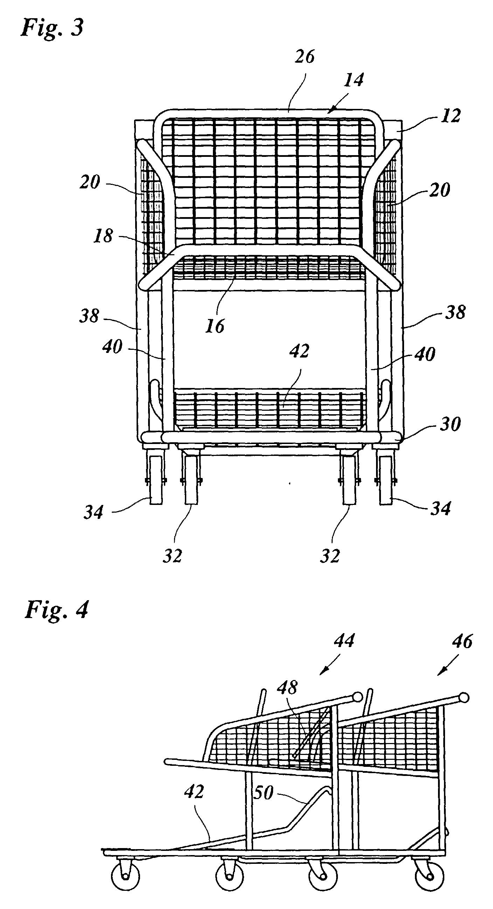

In Figur 4 ist zu erkennen, wie zwei Einkaufswagen 44. 46 der in Figuren 1-3 gezeigten Art ineinandergeschoben werden. Wie üblich hat der Korb 10 eine schwenkbare Rückwand 48, die das Einschieben des Korbes des hinteren Einkaufswagens 46 gestattet. Das Bodenrost 42 ist um sein vorderes Ende schwenkbar und liegt mit seinem rückwärtigen Ende lose auf einer nicht gezeigten waagerechten Sprosse auf. Der hintere Endabschnitt 50 des Bodenrostes 42 bildet eine hinten schräg aufwärts verlaufende Rampe 50, so daß das Bodenrost beim Einschieben des Einkaufswagens 46 durch dessen Fahrgestell nach oben verschwenkt wird.

## Patentansprüche

1. Einkaufswagen mit einem Korb (10), einem am rückwärtigen Ende des Korbes angebrachten Schiebegriff (12) und einer am vorderen Ende des Einkaufswagens angeordneten Sitzplatte (18), dadurch **gekennzeichnet**, daß die Sitzplatte (18) ein nach vorn über den Korb (10) verlängerter Teil der Bodenwand (16) des Korbes ist.

2. Einkaufswagen nach Anspruch 1, dadurch **gekennzeichnet**, daß die Seitenwände (20) des Korbes (10) nach vom verlängert sind und mit der Sitzplatte (18) verbunderne Armlehnen (24) bilden.

3. Einkaufswagen nach Anspruch 1 oder 2, dadurch **gekennzeichnet**, daß die vordere Wand (26) des Korbes (10) nach hinten geneigt ist und eine Rückenlehne des durch die Sitzplatte (18) gebildeten Sitzes (14) bildet.

4. Einkaufswagen nach einem der vorstehenden Ansprüche, dadurch **gekennzeichnet**, daß die Sitzplatte (18) durch einen Rahmen mit Gittertost gebildet wird.

5. Einkaufswagen nach einem der vorstehenden Ansprüche, dadurch **gekennzeichnet**, daß die hinteren Räder (34) des Einkaufswagens lenkbar und die vorderen Räder (32) nicht lenkbar sind.

6. Einkaufswagen nach einem der vorstehenden Ansprüche, dadurch **gekennzeichnet**, daß am vorderen Ende des Fahrgestells (28) des Einkaufswagens eine Fußraste (36) ausgebildet ist.

7. Einkaufswagen nach einem der vorstehenden Ansprüche, dadurch **gekennzeichnet**, daß unterhalb der Sitzplatte (18) und der Bodenwand (16) des Korbes (10) etwa in Höhe des Fahrgestells (28) ein Bodenrost (42) angeordnet ist.

8. Einkaufswagen nach einem der vorstehenden Ansprüche, dadurch **gekennzeichnet**, daß die Bodenwand (16) des Korbes (10) und die Sitzplatte (18) nach vorn leicht ansteigen und daß der Korb (10) eine schwenkbare Rückwand (48) aufweist.

9. Einkaufswagen nach den Ansprüchen 7 und 8, dadurch **gekennzeichnet**, daß das Bodenrost (42) entweder um sein vorderes Ende oder um sein hinteres Ende im Bezug auf das Fahrgestell (28) schwenkbar ist und am jeweils entgegengesetzen Ende eine schräge Rampe (50) bildet, die das ineinanderschieben der Einkaufswagen (44, 46) gestattet.
